# EUROPEAN PATENT APPLICATION

(11) **EP 2 053 799 A1**
(43) Date of publication of application: **29.04.2009**
(21) Application number: 07829732.2
(22) Date of filing: 12.10.2007
(51) Int. Cl.: H04L 12/56

(54) **COMMUNICATION APPARATUS AND COMMUNICATION METHOD**

(30) Priority: 17.10.2006 JP 2006282410
(71) Applicant: Panasonic Corporation, Kadoma-shi Osaka 571-8501 (JP)
(72) Inventor: MATSUSHITA, Yosuke c/o Panasonic Corporation, 1-61, Shiromi 2-chome, Chuo-ku, Osaka-shi Osaka 540-6207 (JP); OKAZAKI, Yoshinori c/o Panasonic Corporation, 1-61, Shiromi 2-chome, Chuo-ku, Osaka-shi Osaka 540-6207 (JP); KURATA, Hiroshi c/o Panasonic Corporation, 1-61, Shiromi 2-chome, Chuo-ku, Osaka-shi Osaka 540-6207 (JP); OGOSE, Go c/o Panasonic Corporation, 1-61, Shiromi 2-chome, Chuo-ku, Osaka-shi Osaka 540-6207 (JP); TSUJI, Atsuhiro c/o Panasonic Corporation, 1-61, Shiromi 2-chome, Chuo-ku, Osaka-shi Osaka 540-6207 (JP)
(74) Representative: Pautex Schneider, Nicole Véronique
(86) International application number: PCT/JP2007/069996
(87) International publication number: WO 2008/047727

(57) **Abstract**

The present invention provides a communication apparatus and a communication method which can avoid unnecessary suppression of transmission rate and improve the transmission rate between the apparatuses, for example, in a home network. A communication apparatus (100) includes a congestion control determining unit (104) which determines, based on IP addresses that are location information in the network of the communication apparatus (100) and the counterpart side communication apparatus (500), the necessity of congestion control in the network when transmission is performed to the counterpart side communication apparatus (500), and a transmission rate controlling unit (101) which controls transmission rate of data according to the necessity of the congestion control.

## Description

### Technical Field

The present invention relates to a communication apparatus which performs congestion control when transmitting data via a network, and a communication method thereof.

### Background Art

In data transmission using a TCP/IP network, data is transmitted and received in units called packets. A packet, transmitted from a transmitting side apparatus, reaching a receiving side apparatus is checked through the receiving side apparatus transmitting a positive Acknowledgement Packet (hereinafter referred to as ACK packet) and the transmitting side apparatus receiving it. The amount of data which the transmitting side apparatus can continuously transmit to the receiving side apparatus without receiving an ACK packet is limited by window size. The window size is generally set to be the minimum value (min(RWIN, cwnd)) out of the maximum amount of data that the receiving side apparatus can hold (Receive Window: hereinafter referred to as RWIN) and the amount of data that can be retained in the network (Congestion window size: hereinafter referred to as cwnd).

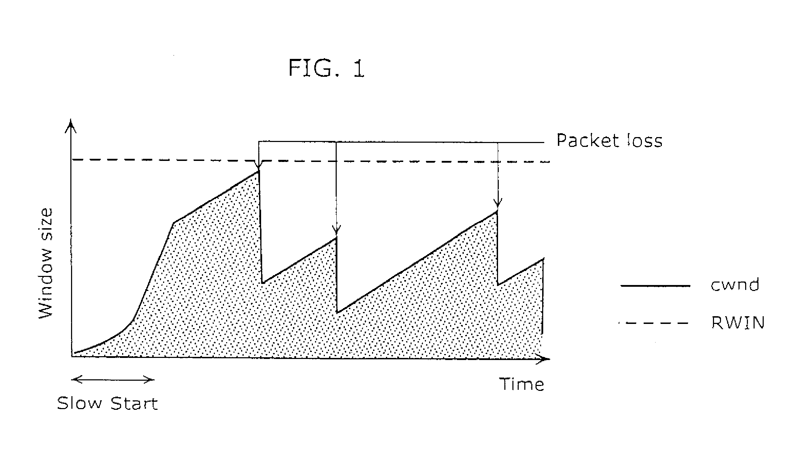

FIG. 1 shows an example of the transition of the TCP window size in an environment where packet loss occur.

Here, cwnd increases and decreases according to the state of network congestion. Currently, cwnd is controlled by the transmitting side apparatus. Upon reception of an ACK packet, a transmission communication apparatus determines that more data can be transmitted into the network, and increases cwnd. On the other hand, upon detection of a packet loss, the transmission communication apparatus determines that there are too many transmission packets (being in a congestion state), and decreases cwnd by half. Furthermore, since setting an appropriate cwnd is difficult when communications start, the size of cwnd is increased starting from a single packet size till reaching an appropriate size. This is an algorithm called Slow Start. In a TCP/IP network, such a congestion control is performed.

With diversification and wider bandwidth of networks in recent years, a problem has existed where the transmission rate is unnecessarily suppressed when such a control is used. One of the reasons is that the advent of wireless network has made congestion detection difficult. In a conventional wired network, packet loss were caused mainly due to buffer overflow associated with network congestion, and the possibility of suppressing transmission rate unnecessarily was extremely low even though the congestion control was performed according to each packet loss. However, in a wireless network, packet loss may occur due to the temporal deterioration of transmission channel such as noise. In such a case, a problem occurs in which transmission rate is unnecessarily suppressed. Another reason is that wider bandwidth of networks has made the time necessary for reaching the appropriate rate longer. For example, when the Slow Start algorithm is used, the time necessary for reaching an optimal communication rate in optical fiber takes several times as long as the time necessary for reaching an optical communication rate in modems. Due to the above reasons, cwnd unnecessarily suppresses transmission rate in spite of the fact that RWIN has more capacity as shown in FIG. 1. This results, for example, in causing such a state where data that needs to be displayed immediately cannot be displayed immediately.

In order to solve this problem, a method has been proposed which performs window control by obtaining congestion state information from relay apparatuses (see non-patent document 1 and non-patent document 2, for example).

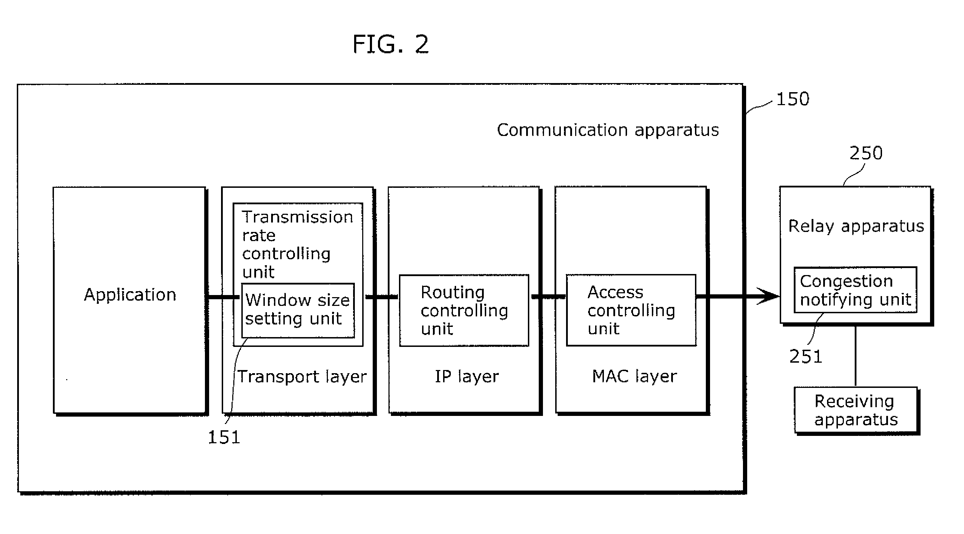

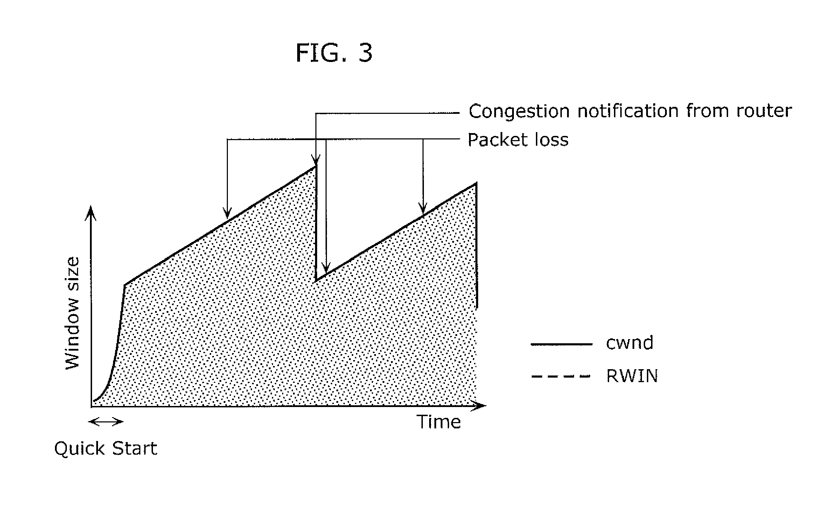

FIG. 2 is a block diagram showing a system structure for providing a method with which a conventional window control is performed. FIG. 3 shows an example of the transition of the TCP window size when the conventional window control is performed.

In the technique disclosed in the non-patent document 1, a congestion notifying unit 251 in a relay apparatus 250 measures the amount of packets existing in a buffer, and notifies a communication apparatus 150 that congestion has occurred when the measured amount exceeds a threshold. As shown in FIG. 3, a window size setting unit 151 in the communication apparatus 150 performs transmission without decreasing the congestion window size (cwnd) even when packet loss occur, and performs transmission while decreasing the congestion window size upon reception of notification of the occurrence of congestion. By doing so, it is possible to avoid decrease in window size due to packet loss that are caused in wireless links and are not related to congestion.

In the technique disclosed in the non-patent document 2, as in the technique in the non-patent document 1, the relay apparatus notifies the communication apparatus of the congestion state. When there is no occurrence of congestions, congestion window size (cwnd) is increased at a faster pace than Slow Start as shown in FIG. 3. By doing so, it is possible to shorten the time necessary for reaching the optimal rate.
Non Patent Reference 1: REQUEST FOR COMMNET 3168: Explicit Congestion Notification, September 2001
Non Patent Reference 2: Internet Draft: Quick Start for TCP and IP, 20 February 2005

### Disclosure of Invention

### Problems that Invention is to Solve

However, the above mentioned conventional techniques require obtaining congestion states from all relay apparatuses between the transmitting side apparatus and the receiving side apparatus, which results in a state where each of the relay apparatuses needs to meet this requirement. In order for all communication apparatuses in the network to use the above techniques, all relay apparatuses in the network have to include a function to notify congestion state. That is to say, it can be said that it is difficult to use such techniques other than in a specially constructed advanced network (mobile phone network, for example). In a network constructed with inexpensive apparatuses such as home network, it is necessary to obtain similar effects with a simpler method.

The present invention is conceived in view of the above reasons, and it is an object of the present invention to provide a communication apparatus and a communication method which are capable of improving communication rate among apparatuses in the home network, for example, while avoiding unnecessary suppression of the transmission rate.

### Means to Solve the Problems

In order to achieve the above described object, the communication apparatus according to the present invention is a communication apparatus which performs transmission and reception of data with a counterpart side communication apparatus connected via a network and controls transmission rate of the data, the communication apparatus includes: a congestion control determining unit which determines, based on location information, a necessity of a congestion control in the network when the data is transmitted to the counterpart side communication apparatus, the location information indicating a location of the communication apparatus and the counterpart side communication apparatus in the network; and a transmission rate controlling unit which controls the transmission rate of the data when the data is transmitted to the counterpart side communication apparatus according to the necessity of the congestion control determined by the congestion control determining unit.

With this, it is possible to avoid unnecessary suppression of transmission rate and improve the transmission rate among apparatuses.

Here, the congestion control determining unit may (i) determine, based on the location information of the communication apparatus and the counterpart communication apparatus, whether or not the communication apparatus and the counterpart side communication apparatus are within a same network management range, and when a result of the determination show that the communication apparatus and the counterpart side communication apparatus are within the same network management range, (ii) determine that no congestion control is necessary , and the transmission rate controlling unit may control, without performing the congestion control, transmission rate of the data when the data is transmitted to the counterpart side communication apparatus.

With this, it is possible to avoid unnecessary suppression of transmission rate since no congestion control is performed when the transmission side communication apparatus and the counterpart side communication apparatus are within the same network management range, and to improve the transmission rate among apparatuses. Here, the term "within the same network management range" indicates being in a home LAN, such as home network.

Further, the location information may be an IP address, and the congestion control determining unit may determine that the communication apparatus and the counterpart side communication apparatus are within the same network management range when network portion of the respective IP addresses of the communication apparatus and the counterpart side communication apparatus are identical.

With this, it is possible to easily determine whether or not the transmission side communication apparatus and the counterpart side communication apparatus are within the same network management range.

Further, the location information may be information obtained from a network management server that manages information associated with a communication apparatus in the network, and the congestion control determining unit may determine, based on the information obtained from the network management server, whether or not the communication apparatus and the counterpart side communication apparatus are within the same network management range.

Further, the location information may be an IP address of a relay apparatus on a network path to the counterpart side communication apparatus, and the congestion control determining unit may determine that the communication apparatus and the counterpart side communication apparatus are within the same network management range when network portion of the respective IP addresses of the communication apparatus and the relay apparatus are identical.

With this, it is possible to recognize the communication states of communication apparatuses in the LAN where the communication apparatus and the counterpart side communication apparatus belong, and to easily avoid unnecessary suppression control of transmission rate.

Further, the congestion control determining unit may further include: an other apparatus communication state determining unit which (i) obtains communication state information indicating communication state of an other communication apparatus, and (ii) determines the communication state of the other communication apparatus based on the obtained communication state information, and an apparatus internal flow count determining unit which (i) obtains flow count information indicating flow count of the communication apparatus, and (ii) determines the communication state of the communication apparatus based on the obtained flow count information, and the congestion control determining unit may determine a necessity of the congestion control in the network when the data is transmitted to the counterpart side communication apparatus, based on the location information and the communication state of the communication apparatus and the counterpart side communication apparatus.

With this, it is possible to recognize the communication states of communication apparatuses in the LAN where the communication apparatus and the counterpart side communication apparatus belong, and to easily avoid unnecessary suppression control of transmission rate.

Further, the communication apparatus may further includes a priority determining unit which determines priority for respective transmissions of the communication apparatus and of the other communication apparatus, in which the congestion control determining unit may (i) determine whether or not the communication apparatus and the counterpart side communication apparatus are within the same network management range based on the location information of the communication apparatus and the counterpart side communication apparatus, and when a result of the determination shows that the communication apparatus and the counterpart side communication apparatus are within the same network management range, and also when the communication state indicates being in communication, (ii) determine that the congestion control is necessary, and the transmission rate controlling unit may (i) perform the congestion control based on the priority and (ii) control transmission rate of the data when the data is transmitted to the counterpart side communication apparatus.

With this, it is possible to recognize priority information of communication apparatuses in the LAN where the communication apparatus and the counterpart side communication apparatus belong, and to improve Quality of Service (QoS) in the entire LAN.

Further, the transmission rate controlling unit may (i) set a window size notified by the counterpart side communication apparatus as a window size when the congestion control determining unit determines that no congestion control is necessary, and (ii) set, in other cases, a minimum value out of the window size notified by the counterpart side communication apparatus and a congestion window size, as a window size.

With this, it is possible to easily avoid unnecessary suppression control of transmission rate according to the necessity of congestion control.

Further, the transmission rate controlling unit may (i) determine transmission rate according to reception capability of the counterpart side communication apparatus when the congestion control determining unit determines that no congestion control is necessary, and (ii) increase and decrease, in other cases, the transmission rate according to a positive acknowledgement and a negative acknowledgement of the counterpart side communication apparatus.

With this, it is possible to easily avoid unnecessary suppression control of transmission rate according to the necessity of congestion control.

Further, the location information may be an IP address, and the communication apparatus may further include a communication history storing unit which stores communication history of the communication apparatus, and the transmission rate controlling unit may set a congestion window size included in the communication history as an initial window size.

With this, it is possible to recognize history information of past transmission between the communication apparatus and the counterpart side communication apparatus, and to set the initial window size at an appropriate value.

Further, the location information may be a wireless LAN mode (ad hoc and infrastructure), and the transmission rate controlling unit used in an ad hoc mode in a wireless LAN may (i) set a window size notified by the counterpart side communication apparatus as a window size when the communication apparatus does not have any other flows, and (ii) set, in other cases, a minimum value out of a window size notified by the counterpart side communication apparatus and a congestion window size, as a window size.

With this, it is possible to determine the necessity of congestion control according to the mode of wireless LAN. Furthermore, unnecessary suppression control of transmission rate can be easily avoided.

It should be noted that the present invention may be implemented, not only as a communication apparatus as described, but also as a communication method which includes the characteristic units of the communication apparatus as a step, or a program that causes a computer to execute these steps. Furthermore, it is needless to say that such a program may be distributed via a recording medium such as CD-ROM, or transmission media such as the Internet.

### Effects of the Invention

The communication apparatus and the communication method according to the present invention can improve communication rate among apparatuses in the home network, for example, without requiring any changes to routers.

### Brief Description of Drawings

FIG. 1 shows an example of the transition of the TCP window size in an environment where packet loss occur.
FIG. 2 is a block diagram showing a system structure for providing a method with which a conventional window control is performed.
FIG. 3 shows an example of the transition of the TCP window size when the conventional window control is performed.
FIG. 4 is a block diagram showing a network structure in which a communication apparatus according to a first embodiment of the present invention is used.
FIG. 5 is a block diagram showing the structure of the communication apparatus according to the first embodiment of the present invention.
FIG. 6 is a flow chart showing operations of a communication apparatus 100.
FIG. 7 shows an example of the transition of the window size according to the first embodiment of the present invention.
FIG. 8 shows an example of the transition of the window size according to the first embodiment of the present invention.
FIG. 9 shows an example of the transition of the window size according to the first embodiment of the present invention.
FIG. 10 shows an example when another communication apparatus is performing communication.
FIG. 11 is a block diagram showing the structure of a relay apparatus which includes a receiving unit in addition to the structure of the communication apparatus 100.
FIG. 12 shows an example when a plurality of networks can be regarded as a logical LAN.
FIG. 13 is a block diagram showing the structure of the communication apparatus when transition history of the window size is used.
FIG. 14 shows an example of the transition of the window size according to the first embodiment of the present invention.

### Numerical References

100, 120 Communication apparatus
101 Transmission rate controlling unit
102 Routing controlling unit
103 Access controlling unit
104 Congestion control determining unit
105 Apparatus internal flow count determining unit
106 Communication counterpart location determining unit
107 Other apparatus communication state determining unit
108 Window size setting unit
109 Terminal priority determining unit
121 Communication history storing unit

### Best Mode for Carrying Out the Invention

Hereinafter, the embodiment of the present invention shall be described with reference to the drawings.

### (First Embodiment)

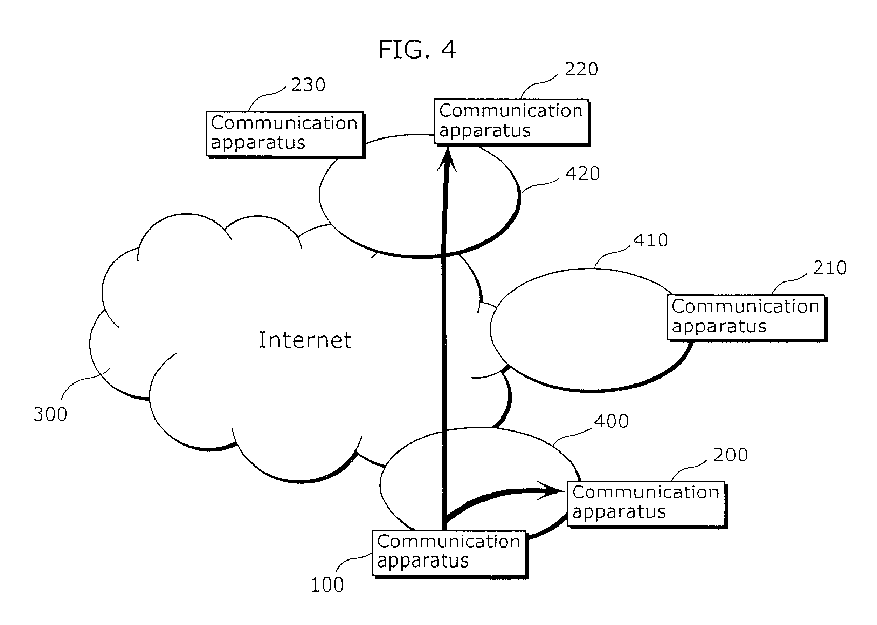

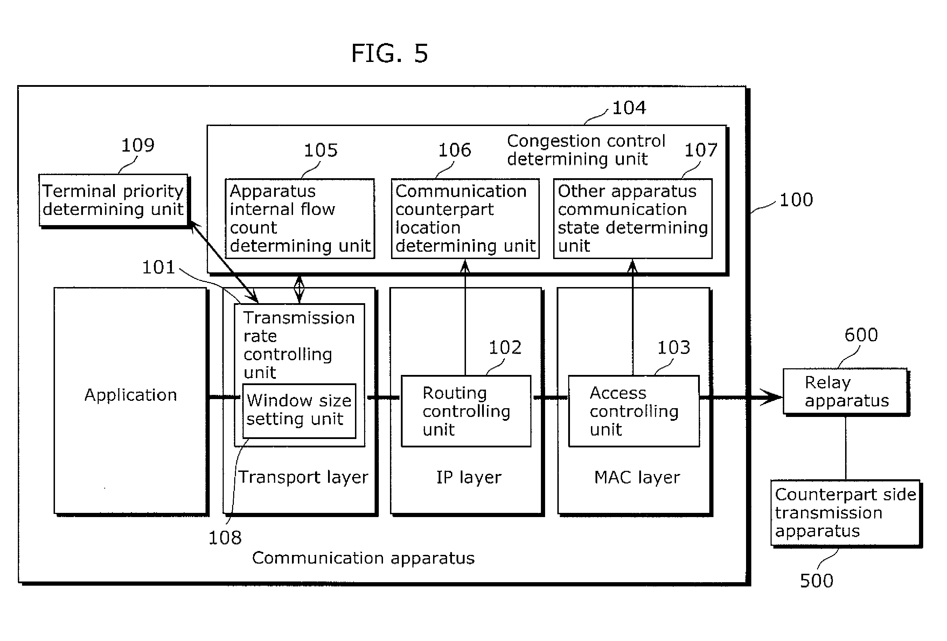

FIG. 4 is a block diagram showing a network structure in which a communication apparatus according to a first embodiment of the present invention is used, and FIG. 5 is a block diagram showing the structure of the communication apparatus according to the first embodiment of the present invention.

As shown in FIG. 4, a communication apparatus 100 is connected to a communication apparatus 200 and the Internet 300 via a LAN 400. The internet 300 is connected to several LANs 410 and 420, and the LANs 410 and 420 are connected to several communication apparatuses 210, 220 and 230.

Protocols used by the Internet can be classified into two main types; one is a protocol such as TCP, for example, in which data transmission rate is controlled using positive acknowledgement and negative acknowledgement that are feedback information from a receiving side communication apparatus, and the other is a protocol such as UDP, for example, in which transmission rate is determined by an application. In recent years, when respective communication apparatuses perform communication at the rate requested by an application, data exceeding the rate limit of the link is flown into the network, which results in a lot of protocols performing congestion control based on the feedback information. For example, when the communication apparatus 100 at the transmission side is connected to a counterpart side communication apparatus 220 via the Internet, recognizing communication states of other communication apparatuses on the path is extremely difficult for the communication apparatus 100 at the transmission side, but it can be easily estimated within the LAN 400. Here, the term "within the LAN" indicates the range where a communication apparatus can recognize communication states of other communication apparatuses. For example, when a single administrator runs information of a plurality of networks, the plurality of networks can be regarded as a LAN. In such an environment, it is desirable that the communication apparatus 100 at the transmission side switches transmission rate control according to whether the counterpart communication apparatus at the receiving side is the communication apparatus 220 that is connected via the Internet 300, or is the communication apparatus 200 that exists within the LAN 400.

The communication apparatus 100 is an apparatus which controls the transmission rate of data according to the necessity of congestion control in the network, and includes, as shown in FIG. 5, a transmission rate controlling unit 101, a routing controlling unit 102, an access controlling unit 103, a congestion control determining unit 104 and a terminal priority determining unit 109.

The transmission rate controlling unit 101 includes a window size setting unit 108, and controls the transmission rate of data when transmission is performed to the counterpart side communication apparatus. The window size setting unit 108 sets the window size according to the necessity of congestion control. The routing controlling unit 102 obtains an IP address of a counterpart side communication apparatus 500.

The access controlling unit 103 obtains communication state information indicating the communication states of other communication apparatuses when the counterpart side communication apparatus exists within the same network. Here, the obtained communication state information varies depending on the controlling method of MAC layer, such as for example, carrier sense information of Career Sence Multiple Access (CSMA) control function, Request to Send/Clear to Send (RTS/CTS) information in wireless LAN, HALF/FULL information in the Ethernet (registered trademark), and slot allocation information in a time division multiple access method. The slot allocation information in the time division multiple access method includes an allocation using polling or tokens.

The congestion control determining unit 104 includes an apparatus internal flow count determining unit 105, a communication counterpart location determining unit 106 and an other apparatus communication state determining unit 107. The congestion control determining unit 104 determines the necessity of congestion control in the network when transmission is performed to the counterpart side communication apparatus 500, based on IP addresses which are location information in the network of the communication apparatus 100 and the counterpart side communication apparatus 500. The apparatus internal flow count determining unit 105 obtains flow count information indicating the internal flow count of the communication apparatus 100, and determines the communication state of the communication apparatus 100 based on the obtained flow count information. The communication counterpart location determining unit 106 determines whether or not the network portion of the respective IP addresses of the communication apparatus 100 and the counterpart side communication apparatus 500 are identical. When identical, the communication counterpart location determining unit 106 determines that the communication apparatus 100 and the counterpart side communication apparatus 500 are within the same network management range. The other apparatus communication state determining unit 107 determines whether or not other communication apparatuses are performing communications which cause congestion, based on the communication state information, obtained by the access controlling unit 103, of other communication apparatuses.

The terminal priority determining unit 109 determines whether or not priority exists for respective transmissions of the communication apparatus 100 and of other communication apparatuses. Here, the priority for the transmission of the communication apparatus 100 is, for example, obtained from the application that performed the transmission. The priority for the transmission of the communication apparatus 100 may be set in advance. On the other hand, for transmission of other communication apparatuses, priority such as Type of Service in IPv4 and Flow Labels in IPv6 that are included in a packet can be used. A structure may be used in which priority for communication apparatuses in a LAN is set in advance and a table that records the priority of respective communication apparatuses is managed.

Next, operations of the communication apparatus 100 structured as above shall be described.

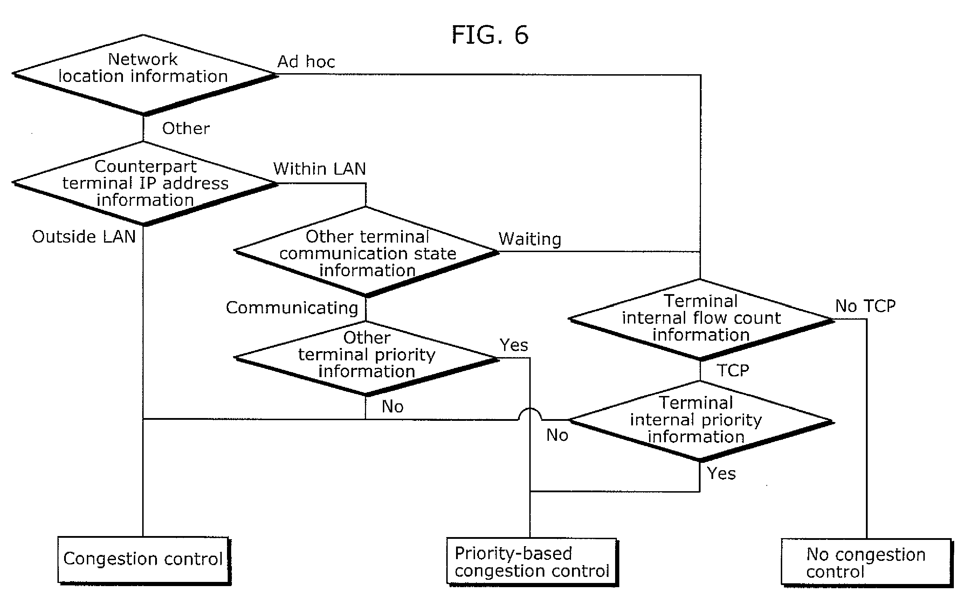

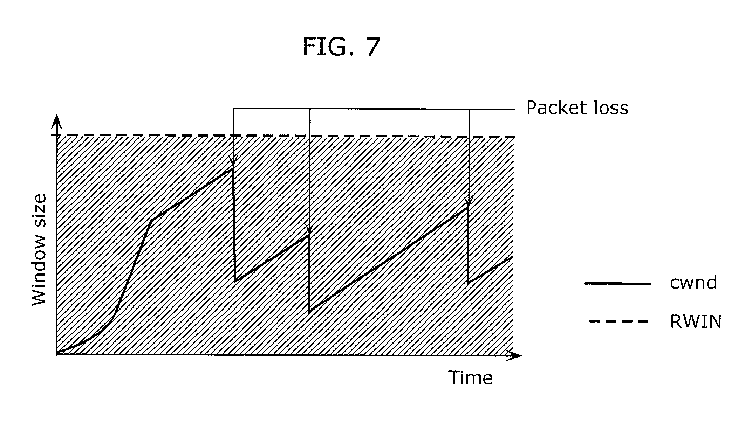

FIG. 6 is a flow chart showing operations of the communication apparatus 100, and FIG. 7 through FIG. 9 show examples of the transition of the window size according to the present embodiment.

The communication counterpart location determining unit 106 in the communication apparatus 100 determines whether ad hoc mode is used or infrastructure mode is used in a wireless LAN (S101). When the result of the determination shows that the ad hoc mode is used, it can be estimated that transmission of other communication apparatuses will not cause congestion. Next, the apparatus internal flow count determining unit 105 obtains flow count information indicating the flow count of the communication apparatus 100, and determines whether any other TCP flows exist or not (S102).

When the result of the determination shows that no other TCP flows exist (No in S102), the transmission rate controlling unit 101 transmits data without performing congestion control (S103). That is to say, as shown in FIG. 7, the window size setting unit 108 sets the window size (RWIN) notified by the counterpart side communication apparatus 500 as a window size. In other words, there is no need to depend on positive and negative acknowledgements transmitted from the counterpart side communication apparatus 500.

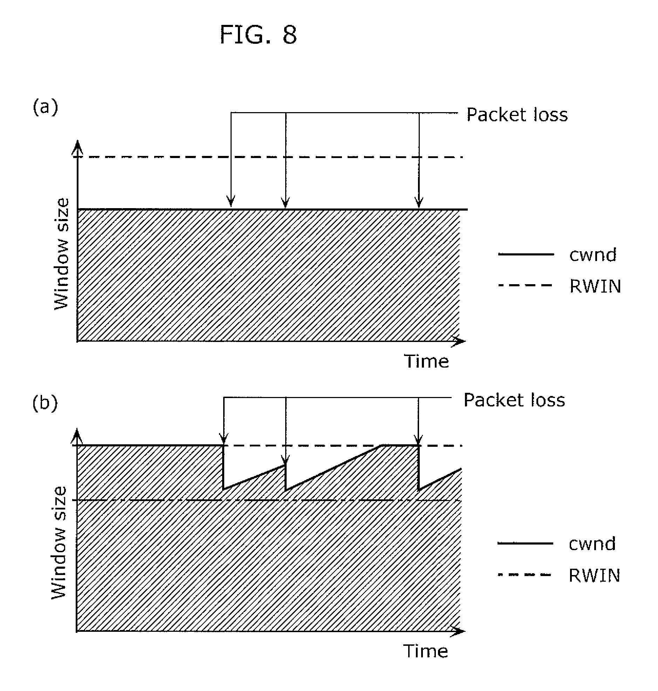

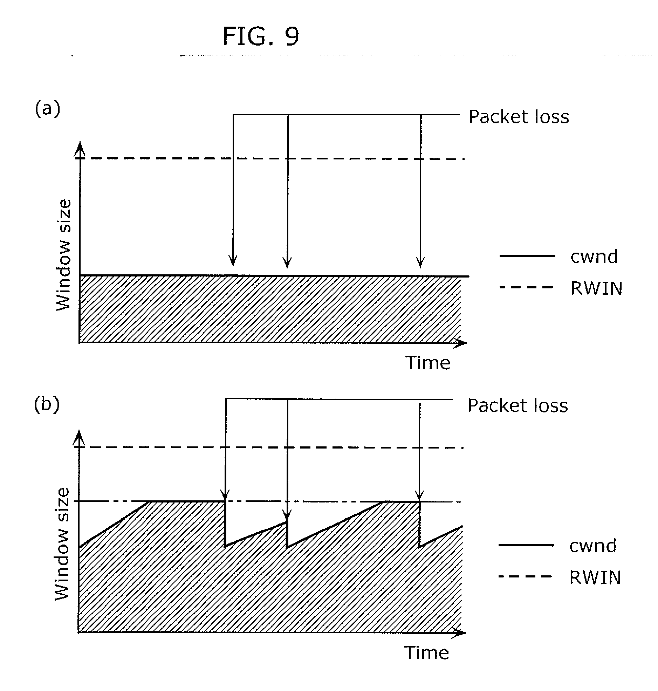

On the other hand, when other TCP flows exit (Yes in S102), the terminal priority determining unit 109 determines whether or not priority for the transmission of the communication apparatus 100 exists (S104). When the result of the determination shows that the priority exists (Yes in S104), the transmission rate controlling unit 101 performs priority-based congestion control (S105). That is to say, when the priority for the transmission that is to be performed is higher than for other TCP flows, the window size setting unit 108, for example as shown in FIG. 8(a), sets the congestion window size at a predetermined size which is relatively high without decreasing the congestion window size according to each packet loss. The predetermined relatively high congestion window size can, for example, be determined by the following equation: window size = RTT x desired transmission rate. Here, RTT (Round Trip Time) is the length of time it takes for data to travel from the transmitting side to the counterpart side and for an acknowledgement to be returned. Alternatively, the window size setting unit 108 may decrease the congestion window size according to each packet loss while keeping a predetermined window size at least as in FIG. 8(b). On the other hand, when the priority for transmission that is to be performed is lower than the priority for other TCP flows, the congestion window size is, for example, fixed at a predetermine size which is relatively low, as shown in FIG. 9(a). Alternatively, as shown in FIG. 9 (b), the window size setting unit 108 may set the congestion window size to be equal or less in size than a predetermined window size.

On the other hand, when no priority exists (No in S104), the transmission rate controlling unit 101 performs normal congestion control (S106). That is to say, the window size setting unit 108 sets, as a window size, the minimum value out of the window size notified by the counterpart side communication apparatus 500 and the congestion window size.

When the result of the determination (S101) shows that the infrastructure mode is used, the communication counterpart location determining unit 106 determines whether or not the network portion of the respective IP addresses of the communication apparatus 100 and the counterpart side communication apparatus 500 obtained by the routing controlling unit 102 are identical (S107). When the result of the determination shows that the network portions are not identical, that is, when the communication apparatus 100 and the counterpart side communication apparatus 500 are not within the same network management range (LAN) (Outside LAN in S107), the transmission rate controlling unit 101 transmits data while performing normal congestion control (S106).

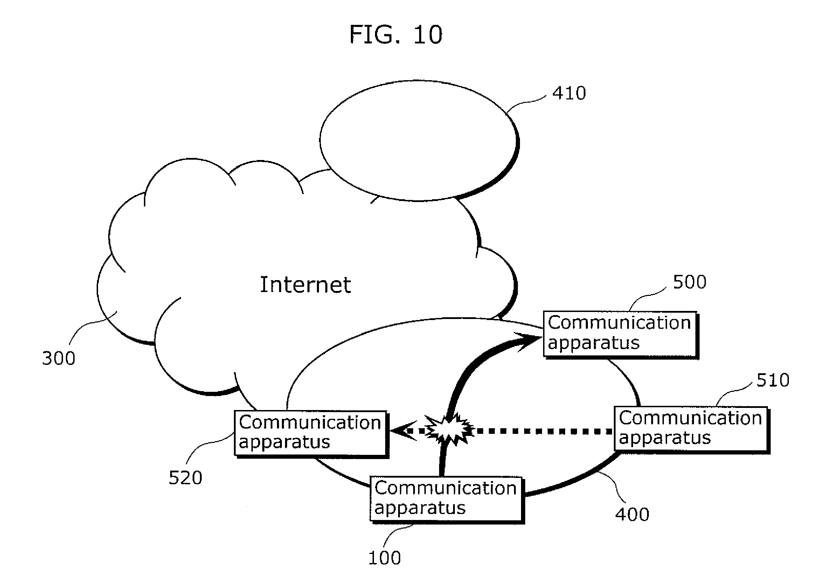

On the other hand, when the network portions are identical, that is, when the communication apparatus 100 and the counterpart side communication apparatus 500 are within the same network management range (LAN) (Within LAN in S107), the other apparatus communication state determining unit 107 determines whether or not other communication apparatuses are performing communication, based on the communication state information, obtained by the access controlling unit 103, of other communication apparatuses (S108). The case where the result of the determination shows that other communication apparatuses are performing communication (Yes in S108) is, for example as shown in FIG. 10, the case where data communication within the same LAN from the communication apparatus 510 to the communication apparatus 520 is detected when the transmission side communication apparatus 100 transmits data through TCP to the communication apparatus 500 that exists within the same LAN. In this case, the terminal priority determining unit 109 determines whether or not priority for transmissions of the communication apparatus 100 and other communication apparatuses exist (S109). When the result of the determination shows that the priority does not exist (No in S109), the transmission rate controlling unit 101 performs normal congestion control (S106). On the other hand, when the priority exists (Yes in S109), the transmission rate controlling unit 101 performs priority-based congestion control (S106).

By processing as described above, it is possible to perform high-rate transmission when transmission is performed to the communication apparatus that exists within the LAN, while avoiding unnecessary congestion control. With this, response characteristics can be improved when Slow Start is avoided and small amount of data is transmitted at high rate. For example, it is useful when small image data needs to be displayed immediately on another apparatus. Furthermore, it is possible to avoid throughput deterioration in a network such as wireless LAN where packet loss occur.

It should be noted that the above described control can also be performed similarly in UDP flow which uses Datagram Congestion Control Protocol (DCCP). When the control is used in DCCP, it is used for the purpose of window size control or transmission rate control.

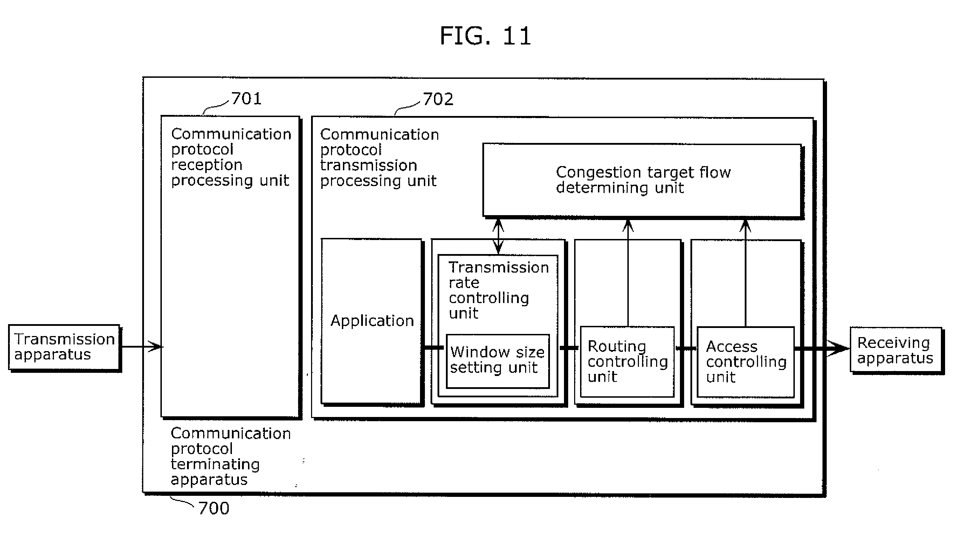

In addition, it is also possible to use such a relay apparatus that includes a receiving unit in addition to the communication apparatus structured as described above and performs protocol terminating. FIG. 11 is a block diagram showing the structure of a relay apparatus which includes a receiving unit in addition to the structure of the communication apparatus 100.

As shown in the figure, the relay apparatus 700 includes a communication protocol reception processing unit 701 and a communication protocol transmission processing unit 702. The communication protocol reception processing unit 701 receives data through TCP. The communication protocol transmission processing unit 702 is similarly structured as the communication apparatus 100. The protocol of the communication protocol transmission processing unit 702 is not limited to TCP, but may be other than TCP as long as the protocol performs TCP-friendly rate control.

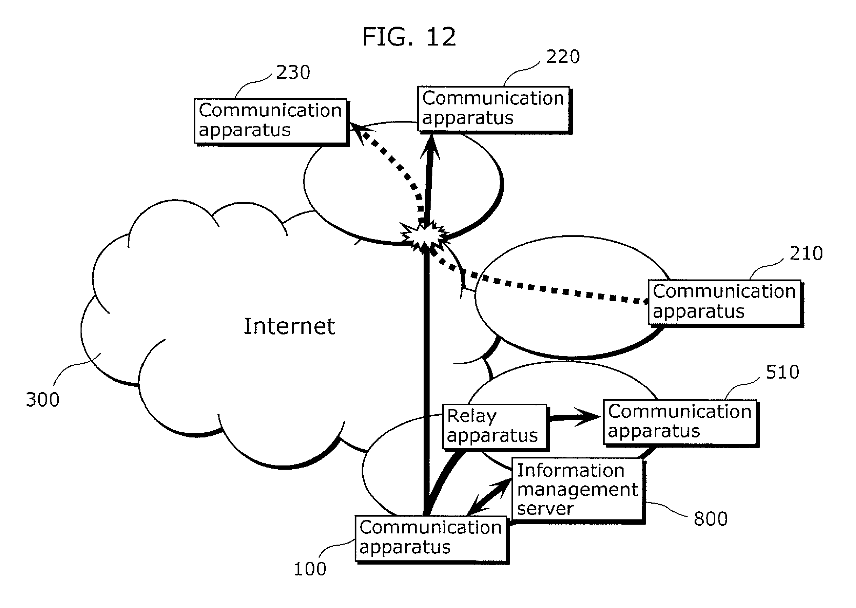

Furthermore, the structure is not limited to as above described, but a plurality of networks may be regarded as a logical LAN. FIG. 12 shows an example when a plurality of networks can be regarded as a logical LAN.

Examples of the cases where a plurality of networks can be regarded as a logical LAN include the case where a wired LAN and a wireless LAN are combined in a home network, and the case where a network is divided into a plurality of networks by placing a router. In such cases, some kind of measures are required so that a communication apparatus can directly obtain network location information, other flow information and the like. One example is a method in which a communication apparatus such as a server that manages information is prepared. Another example is a method which obtains information using tools such as TRACEROUTE, STUN and UPnP that check network structure information. For example, when the function called TRACEROUTE is used, whether or not the communication apparatus and the counterpart side apparatus are within the network management range may be determined by obtaining the IP address of the relay apparatus on the network path using TRACEROUTE and determining whether or not the network measure of the IP address of the relay apparatus and the network portion of the IP address of the receiving apparatus are identical.

By performing such a processing, similar processing as described above can be performed even when a plurality of networks can be regarded as a logical LAN.

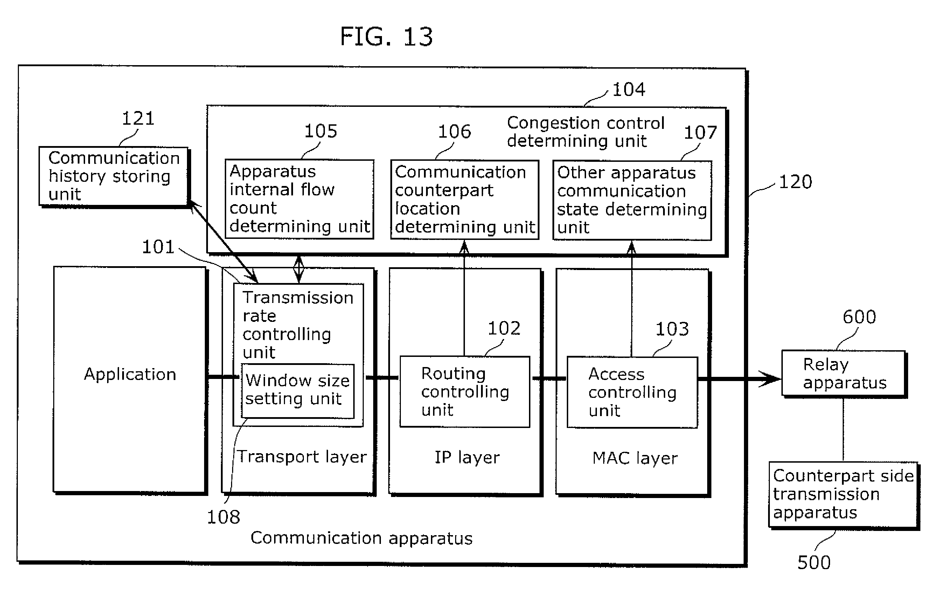

Furthermore, instead of using the above structure, transition history of the past window size may be used. FIG. 13 is a block diagram showing the structure of the communication apparatus when transition history of the window size is used.

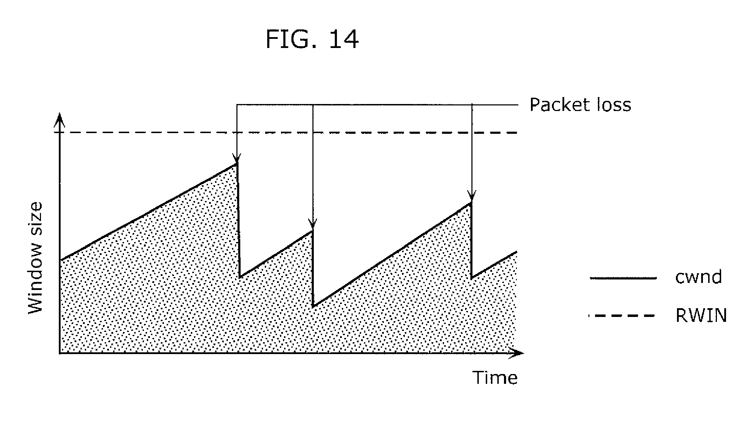

As shown in FIG. 13, the communication apparatus 120 includes a communication history storing unit 121 instead of the terminal priority determining unit 109. The communication history storing unit 121 stores the transition history of the window size for respective counterpart side communication apparatuses. As shown in FIG. 14 for example, when the communication history storing unit 121 includes the transition history of the window size for the counterpart side communication apparatus to which the transmission is to be performed, the window size setting unit 108 designates, based on the stored transition history, the initial window size and the amount of buffer to be held.

By performing such a processing, it is possible to improve the initial window size and reduce memory consumption.

In addition, the communication apparatus 100 may estimate network distance to the counterpart side communication apparatus using RTT, and determine the buffer size to be held accordingly. With this, memory consumption can be reduced.

### Industrial Applicability

A communication apparatus according to the present invention can be applied to any communication apparatuses which perform transmission processing based on TCP.

## Claims

1. A communication apparatus which performs transmission and reception of data with a counterpart side communication apparatus connected via a network and controls transmission rate of the data, said communication apparatus comprising:
a congestion control determining unit configured to determine, based on location information, a necessity of a congestion control in the network when the data is transmitted to the counterpart side communication apparatus, the location information indicating a location of said communication apparatus and the counterpart side communication apparatus in the network; and
a transmission rate controlling unit configured to control the transmission rate of the data when the data is transmitted to the counterpart side communication apparatus according to the necessity of the congestion control determined by said congestion control determining unit.

2. The communication apparatus according to Claim 1,
wherein said congestion control determining unit is configured (i) to determine, based on the location information of said communication apparatus and the counterpart communication apparatus, whether or not said communication apparatus and the counterpart side communication apparatus are within a same network management range, and when a result of the determination show that said communication apparatus and the counterpart side communication apparatus are within the same network management range, (ii) to determine that no congestion control is necessary , and
said transmission rate controlling unit is configured to control, without performing the congestion control, transmission rate of the data when the data is transmitted to the counterpart side communication apparatus.

3. The communication apparatus according to Claim 2,
wherein the location information is an IP address, and
said congestion control determining unit is configured to determine that said communication apparatus and the counterpart side communication apparatus are within the same network management range when network portion of the respective IP addresses of said communication apparatus and the counterpart side communication apparatus are identical.

4. The communication apparatus according to Claim 2,
wherein the location information is information obtained from a network management server that manages information associated with a communication apparatus in the network, and
said congestion control determining unit is configured to determine, based on the information obtained from the network management server, whether or not said communication apparatus and the counterpart side communication apparatus are within the same network management range.

5. The communication apparatus according to Claim 2,
wherein the location information is an IP address of a relay apparatus on a network path to the counterpart side communication apparatus, and
said congestion control determining unit determines that said communication apparatus and the counterpart side communication apparatus are within the same network management range when network portion of the respective IP addresses of said communication apparatus and the relay apparatus are identical.

6. The communication apparatus according to Claim 1,
wherein said congestion control determining unit further includes:
an other apparatus communication state determining unit configured (i) to obtain communication state information indicating communication state of an other communication apparatus, and (ii) to determine the communication state of the other communication apparatus based on the obtained communication state information, and
an apparatus internal flow count determining unit configured (i) to obtain flow count information indicating flow count of said communication apparatus, and (ii) to determine the communication state of said communication apparatus based on the obtained flow count information, and
said congestion control determining unit is configured to determine a necessity of the congestion control in the network when the data is transmitted to the counterpart side communication apparatus, based on the location information and the communication state of said communication apparatus and the counterpart side communication apparatus.

7. The communication apparatus according to Claim 6,
wherein the communication state information of the other communication apparatus is carrier sense information of Career Sence Multiple Access (CSMA) control function.

8. The communication apparatus according to Claim 6,
wherein the communication state information of the other communication apparatus is information of Request to Send/Clear to Send (RTS/CTS) in a wireless LAN.

9. The communication apparatus according to Claim 6,
wherein the communication state information of the other communication apparatus is HALF/FULL information in Ethernet (registered trademark).

10. The communication apparatus according to Claim 6,
wherein the communication state information of the other communication apparatus is slot allocation information in a time division multiple access method.

11. The communication apparatus according to Claim 6,
wherein the flow count information of said communication apparatus is session count in TCP.

12. The communication apparatus according to Claim 6, further comprising
a priority determining unit configured to determine priority for respective transmissions of said communication apparatus and of the other communication apparatus,
wherein said congestion control determining unit is configured (i) to determine whether or not said communication apparatus and the counterpart side communication apparatus are within the same network management range based on the location information of said communication apparatus and the counterpart side communication apparatus, and when a result of the determination shows that said communication apparatus and the counterpart side communication apparatus are within the same network management range, and also when the communication state indicates being in communication, (ii) to determine that the congestion control is necessary, and
said transmission rate controlling unit is configured (i) to perform the congestion control based on the priority and (ii) to control transmission rate of the data when the data is transmitted to the counterpart side communication apparatus.

13. The communication apparatus according to Claim 12,
wherein said transmission rate controlling unit is configured to perform transmission to a communication apparatus with higher priority in a fixed window size.

14. The communication apparatus according to Claim 12,
wherein said transmission rate controlling unit performs transmission to the communication apparatus with higher priority, while keeping a predetermined window size at least.

15. The communication apparatus according to Claim 12,
wherein the transmission rate controlling unit performs transmission to the communication apparatus with higher priority without decreasing transmission rate with respect to a negative acknowledgement.

16. The communication apparatus according to Claim 1,
wherein said transmission rate controlling unit is configured (i) to set a window size notified by the counterpart side communication apparatus as a window size when said congestion control determining unit determines that no congestion control is necessary, and (ii) to set, in other cases, a minimum value out of the window size notified by the counterpart side communication apparatus and a congestion window size, as a window size.

17. The communication apparatus according to Claim 1,
wherein said transmission rate controlling unit is configured (i) to determine transmission rate according to reception capability of the counterpart side communication apparatus when said congestion control determining unit determines that no congestion control is necessary, and (ii) to increase and decrease, in other cases, the transmission rate according to a positive acknowledgement and a negative acknowledgement of the counterpart side communication apparatus.

18. The communication apparatus according to Claim 1,
wherein the location information is an IP address,
said communication apparatus further includes a communication history storing unit configured to store communication history of said communication apparatus, and
said transmission rate controlling unit is configured to set a congestion window size included in the communication history as an initial window size.

19. The communication apparatus according to Claim 1,
wherein the location information is a wireless LAN mode (ad hoc and infrastructure), and
said transmission rate controlling unit used in an ad hoc mode in a wireless LAN is configured to (i) set a window size notified by the counterpart side communication apparatus as a window size when said communication apparatus does not have any other flows, and (ii) to set, in other cases, a minimum value out of a window size notified by the counterpart side communication apparatus and a congestion window size, as a window size.

20. The communication apparatus according to Claim 1, further comprising a receiving unit configured to receive the data to be transmitted to the counterpart side communication apparatus.

21. A communication method for performing transmission and reception of data between a communication apparatus and a counterpart side communication apparatus that are connected via a network, and controls transmission rate of the data, the communication method comprising:
determining, based on location information, a necessity of a congestion control in the network when the data is transmitted to the counterpart side communication apparatus, the location information indicating a location of said communication apparatus and the counterpart side communication apparatus in the network, and
controlling transmission rate of the data when the data is transmitted to the counterpart side communication apparatus according to the necessity of the congestion control determined in said determining.

22. A program for performing transmission and reception of data between a communication apparatus and a counterpart side communication apparatus that are connected via a network, and controls transmission rate of the data, said program causing a computer to execute:
determining, based on location information, a necessity of a congestion control in the network when the data is transmitted to the counterpart side communication apparatus, the location information indicating a location of said communication apparatus and the counterpart side communication apparatus in the network, and
controlling transmission rate of the data when the data is transmitted to the counterpart side communication apparatus according to the necessity of the congestion control determined in said determining.
